# EUROPÄISCHE PATENTSCHRIFT

(11) **EP 0 546 385 B1**
(45) Veröffentlichungstag und Bekanntmachung des Hinweises auf die Patenterteilung: **24.01.1996**
(21) Anmeldenummer: 92120163.8
(22) Anmeldetag: 26.11.1992
(51) Int. Cl.: F16F 9/04

(54) **Luftfeder für Fahrzeuge mit einem elastomeren Luftfederbalg**
Air spring for vehicles with elastomeric air spring bellows
Ressort pneumatique pour véhicules avec un soufflet élastomèrique

(30) Priorität: 13.12.1991 DE 4141156
(43) Veröffentlichungstag der Anmeldung: 16.06.1993
(73) Patentinhaber: Continental Aktiengesellschaft, D-30165 Hannover (DE)
(72) Erfinder: Schneider, Eckhard, Dr., W-3160 Lehrte (DE)

(56) Entgegenhaltungen:
- EP-A- 0 178 245
- EP-A- 0 184 974
- EP-A- 0 351 678
- GB-A- 1 248 025
- US-A- 3 438 309
- US-A- 3 897 941
- US-A- 4 923 210
- US-A- 4 946 144

## Beschreibung

Die Erfindung betrifft eine Luftfeder für Fahrzeuge mit einem elastomeren Luftfederbalg, der an seinen beiden offenen Enden durch Befestigungsteile abgedichtet ist, über die er an den zueinander abzufedernden Fahrzeugteilen befestigbar ist, wozu mindestens ein Befestigungsteil hervorstehende, eingeschweißte Befestigungsbolzen oder eingelassene, eingeschweißte Befestigungsbuchsen aufweist. Eine derartige Luftfeder ist aus der US-A-3 438 309 bekannt.

Luftfederbälge sind an den beiden offenen Enden mittels Befestigungsteilen abgedichtet und über diese am Fahrzeug befestigt. Um einen dichten Sitz der Enden des Luftfederbalges an den Befestigungsteilen zu erreichen, sind verschiedene abdichtende Anschlußarten bekannt. Die Befestigungsteile können konische Dichtsitze aufweisen, auf denen die Luftfederbälge mit entsprechenden konischen Dichtwülsten sitzen. Wulstlose Luftfederbälge werden mit Spannringen auf den Befestigungsteilen montiert. Luftfederbälge mit verspannbaren Dichtwülsten werden an einem als Bördelplatte ausgebildeten Befestigungsteil durch Umbördeln des Plattenrandes dicht verspannt. Luftfederbälge mit verspannbaren Dichtwülsten und wulstlose Luftfederbälge werden komplett mit den Befestigungsteilen montiert an den Fahrzeughersteller geliefert.

Die mit den Befestigungsteilen zu einer Luftfeder komplettierten Luftfederbälge werden beispielsweise zwischen dem Fahrzeugrahmen und den Fahrzeugachsen eingebaut, wobei das obere Befestigungsteil, das an einem Träger des Fahrzeugrahmens befestigt wird, üblicherweise als Befestigungsplatte mit hervorstehenden Befestigungsbolzen ausgebildet ist. Die Befestigungsbolzen sind mit ihren Bolzenköpfen auf der Innenfläche der Befestigungsplatte festgeschweißt. Es ist auch möglich, die Befestigungsplatte mit eingelassenen, z.B. eingeschweißten Buchsen zu versehen, in die bei der Montage am Fahrzeug Schraubbolzen geschraubt werden.

Luftfedern mit einem Balg aus elastomerem Werkstoff bewähren sich seit Jahrzehnten als lastregelbare Federelemente im Fahrzeugbau. Trotz dieser positiven Bewahrung der Luftfedern werden Anstrengungen unternommen, um die Lebensdauer und Einsatzsicherheit der Luftfedern zu erhöhen. Dabei wurde das Augenmerk überwiegend auf die Entwicklung spezieller elastomerer Werkstoffe gelegt.

Durch neue Untersuchungen wurde erkannt, daß ein weiterer Grund für ein mögliches Undichtwerden der Luftfeder im Langzeitbetrieb auch die Befestigungsteile sein können. Hierbei wurde die Lebensdauerbeeinträchtigung im Bereich der Befestigung des Befestigungsteils an dem jeweiligen Fahrzeugteil ermittelt. Im Bereich des Bolzenkopfes der Befestigungsbolzen ergibt sich durch den Querschnittssprung eine Kerbwirkung, die bei dynamischer Belastung des Befestigungsteiles durch die Federungsvorgänge die Dauerfestigkeit des Befestigungsbereichs stark reduziert.

Bei diesen dynamischen Belastungen kommt es aufgrund von Aufwölbungen zu Bewegungen und zu geringen Abhebelungen des plattenförmigen Befestigungsteils gegenüber dem Fahrzeugrahmenträger, an dem die Luftfeder befestigt ist. Ist der feststehende Bolzenkopf oder die eingelassene Buchse nun auch noch eingeschweißt, wird die nachteilige Folge der Kerbwirkung wegen der Schweißeinflußzone noch erhöht, so daß es in dieser Zone zu einem Ermüdungsriß kommen kann. Dieser Ermüdungsriß läuft von der Schweißnaht ausgehend in die Befestigungsplatte, so daß Undichtigkeiten entstehen können.

Der Erfindung liegt die Aufgabe zugrunde, eine Luftfeder der eingangs geschilderten Art derart auszugestalten, daß durch schadhaft werdende Befestigungsteile entstehende Undichtigkeiten minimiert werden.

Die Aufgabe wird erfindungsgemäß dadurch gelöst, daß die hervorstehenden, eingeschweißten Befestigungsbolzen oder eingelassenen, eingeschweißten Befestigungsbuchsen innerhalb je einer Vertiefung in der stirnseitigen Außenfläche des Befestigungsteils angeordnet sind.

Durch die Vertiefung um die Befestigungsbolzen oder Befestigungsbuchsen werden die dynamischen Kräfte nicht mehr in den Befestigungsbereich weitergeleitet. Die dynamische Belastung wird in der vor der Vertiefung liegenden Kontaktstelle zwischen Befestigungsteil und Fahrzeugteil abgefangen. Der Befestigungsbereich ist nur noch durch die Vorspannung statisch belastet. Durch die erfindungsgemäße Anordnung einer Vertiefung um die Befestigungsbolzen oder die Befestigungsbuchsen werden die dynamischen Kräfte direkt in den Träger des Fahrzeugrahmens eingeleitet.

Durch die Erfindung wird die eingeleitete dynamische Belastung bereits vor der Bolzenverbindung oder Schraubverbindung von dem Träger aufgenommen, da durch die Vertiefung eine Kontaktstelle zwischen Befestigungsteil und Träger geschaffen wird, die von dem Befestigungsbereich wegverlegt ist. Dadurch wird die dynamische Haltbarkeit der Befestigung erheblich verbessert, da Rißbildungen im Befestigungsbereich deutlich minimiert sind.

Weitere vorteilhafte Ausgestaltungen der Erfindung werden in den Unteransprüchen 2 bis 5 gekennzeichnet.

Anhand der Zeichnung wird nachstehend ein Ausführungsbeispiel der Erfindung näher erläutert. Es zeigt
- Fig. 1: im Ausschnitt eine Bolzenverbindung eines als Bördelplatte ausgebildeten Befestigungsteils an einem Träger eines Fahrzeugrahmens nach dem Stand der Technik,
- Fig. 2: in perspektivischer Draufsicht einen elastomeren Luftfederbalg, der an seinem gezeigten Ende von einem als Bördelplatte ausgebildeten Befestigungsteil dicht verschlossen ist, das hervorstehende, von Vertiefungen umgebende Befestigungsbolzen aufweist,
- Fig. 3: eine Bolzenverbindung der Bördelplatte aus Fig. 2 an einem Fahrzeugrahmenträger.

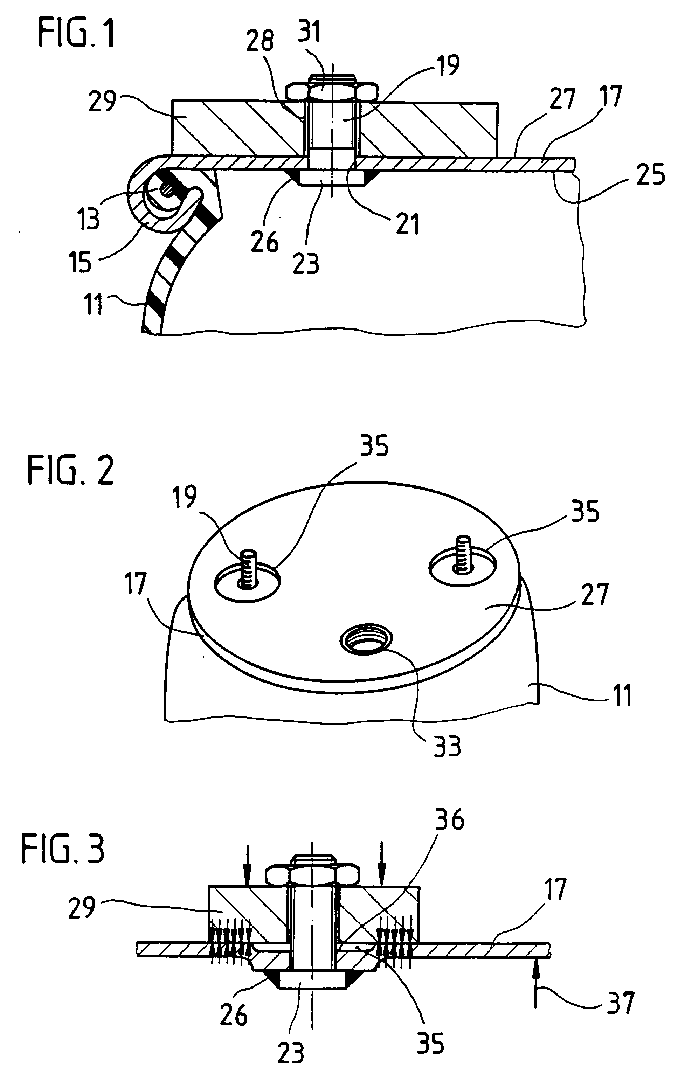

In der Fig. 1 wird ein Luftfederbalg 11 mit einem verspannbaren Dichtwulst 13 gezeigt, der von einem umgebördelten Rand 15 eines als Bördelplatte 17 ausgebildeten oberen Befestigungsteiles umfaßt und dicht verspannt ist. In der Bördelplatte 17 sind mit Außengewinden versehene Befestigungsbolzen 19 angeordnet. Diese Befestigungsbolzen 19 ragen durch eine passende Bohrung 21 in der Bördelplatte und liegen mit ihrem Bolzenkopf 23 an der Innenseite 25 der Bördelplatte 17 an und sind dort mittels einer umlaufenden Schweißnaht 26 befestigt. Auf der stirnseitigen Außenfläche 27 der Bördelplatte 17 stehen die Befestigungsbolzen 19 hervor. Zur Befestiung am Fahrzeugrahmen sind diese Befestigungsbolzen 19 durch Durchgangsbohrungen 28 eines Fahrzeugrahmenträgers 29 gesteckt und mittels einer Schraubenmutter 31 befestigt.

Aufgrund der dynamischen Belastung kommt es zu einem Wölbungseffekt der Bördelplatte 17, die zu einer Abhebelwirkung am Bolzenkopf 23 führt, weil der Befestigungsbolzen 19 fest im Fahrzeugrahmenträger 29 angeordnet ist. Daraus entsteht eine erhebliche dynamische Belastung in der Bördelplatte 17 am Bolzenkopf 23. Da dieser Bereich durch die Kerbwirkung des Querschnittsübergangs und durch die Schweißeinflußzone zusätzlich gefährdet ist, kommt es zu der gefürchteten Rißbildung am Auslauf der Schweißnaht 26.

Der in Fig. 2 schematisch als Ausschnitt gezeigte elastomere Luftfederbalg 11 ist ebenfalls an einem als Bördelplatte 17 ausgebildeten Befestigungsteil dicht eingespannt. Die Bördelplatte 17 weist zwei hervorstehende Befestigungsbolzen 19 auf sowie eine Gewindeöffnung 33 für den Luftanschluß.

Um die hervorragenden Befestigungsbolzen 19 ist jeweils eine kreisförmige, muldenartige Vertiefung 35 von ca. 0,5 mm in die stirnseitige Außenfläche 27 der Bördelplatte 17 eingebracht.

In Fig. 3 wird eine Befestigungsstelle zwischen Bördelplatte 17 und dem Fahrzeugrahmenträger 29 gezeigt. Träger 29 und Bördelplatte 17 liegen nicht bis an den Befestigungsbolzen 19 aufeinander. Es wird eine Kontaktstelle zwischen beiden vor dem Beginn der Vertiefung 35 erreicht. Die in dieser Kontaktstelle auftretende Flächenpressung nimmt die dynamischen Kräfte auf. Der Bereich des Bolzenkopfes 23 und die Schweißeinflußzone 26 bleiben weitgehend frei von dynamischen Belastungen.

Der jeweilige Befestigungsbolzen 19 ist lediglich statisch belastet. Bei einem Anziehen der Schraubenverbindung kann es zu einem federnden Ausweichen des inneren Umfangs 36 der Mulde 35 kommen, das bis zu einem Anliegen des inneren Umfangs 36 bzw. der inneren Kante der Mulde 35 am Träger 29 führt. Da aber weiterhin ein vertiefter Ringraum um die Bolzenverbindung vorhanden ist, wird die dynamische Belastung (Pfeil 37) nicht bis in den Bolzenbereich hineingeleitet.

## Patentansprüche

1. Luftfeder für Fahrzeuge mit einem elastomeren Luftfederbalg (11), der an seinen beiden offenen Enden durch Befestigungsteile abgedichtet ist, über die er an den zueinander abzufedernden Fahrzeugteilen (29) befestigbar ist, wozu mindestens ein Befestigungsteil (17) hervorstehende, eingeschweißte Befestigungsbolzen (19) oder eingelassene, eingeschweißte Befestigungsbuchsen aufweist,
**dadurch gekennzeichnet,** daß die hervorstehenden, eingeschweißten Befestigungsbolzen (19) oder die eingelassenen, eingeschweißten Befestigungsbuchsen innerhalb je einer frei bleibenden Vertiefung (35) in der stirnseitigen Außenfläche (27) des Befestigungsteils (17) angeordnet sind.

2. Luftfeder nach Anspruch 1, dadurch gekennzeichnet, daß die Vertiefungen (35) muldenartig mit gleichbleibender Tiefe über die gesamte Muldenfläche verlaufen.

3. Luftfeder nach Anspruch 2, dadurch gekennzeichnet, daß die Vertiefungen (35) 0,3 mm bis 0,7 mm tief sind.

4. Luftfeder nach Anspruch 1, dadurch gekennzeichnet, daß die Vertiefungen (35) einen geneigten Boden aufweisen.

5. Luftfeder nach Anspruch 1, dadurch gekennzeichnet, daß die Vertiefungen (35) kreisförmig ausgebildet sind .

## Claims

1. Air spring for vehicles, having an elastomeric air spring bellows (11) which is sealed at its two open ends by securing members, via which said bellows is securable to the vehicle parts (29), which are to be damped relative to one another, at least one securing member (17) having for such purpose protruding, welded-in securing bolts (19) or introduced, welded-in securing bushes, characterised in that the protruding, welded-in securing bolts (19) or the introduced, welded-in securing bushes are disposed internally of a respective recess (35) which remains free in the front end of the external face (27) of the securing member (17).

2. Air spring according to claim 1, characterised in that the recesses (35), in the form of troughs, extend over the entire trough area at a uniform depth.

3. Air spring according to claim 2, characterised in that the recesses (35) have a depth of between 0.3 mm and 0.7 mm.

4. Air spring according to claim 1, characterised in that the recesses (35) have an inclined base.

5. Air spring according to claim 1, characterised in that the recesses (35) have a circular configuration.

## Revendications

1. Ressort pneumatique pour véhicules comprenant un soufflet de ressort pneumatique en élastomère qui est fermé aux deux extrémités ouvertes par des pièces de fixation par lesquelles il se fixe aux pièces (29) du véhicule qu'il s'agit de relier élastiquement l'une à l'autre, ce par quoi au moins une pièce de fixation (17) comporte des boulons de fixation (19) qui sont saillants et fixés par soudure ou des douilles de fixation qui sont enchâssées et fixées par soudure,
**caractérisé**
en ce que chacun des boulons de fixation (19) qui sont saillants et fixés par soudure ou chacune des douilles de fixation qui sont enchâssées et fixées par soudure est disposée à l'intérieur d'une cavité (35) demeurant libre et réalisée dans la surface extérieure frontale (27) de la pièce de fixation (17).

2. Ressort pneumatique selon la revendication 1, caractérisé en ce que les cavités (35) sont en forme de cuvette ayant une profondeur constante sur la totalité de la surface de la cuvette.

3. Ressort pneumatique selon la revendication 2, caractérisé en ce que les cavités (35) ont une profondeur de 0,3 mm à 0,7 mm.

4. Ressort pneumatique selon la revendication 1, caractérisé en ce que les cavités (35) ont un fond incliné.

5. Ressort pneumatique selon la revendication 1, caractérisé en ce que les cavités (35) sont circulaires.
